## Europäisches Patentamt

## European Patent Office

## Office européen des brevets

(19)

(11) Veröffentlichungsnummer: **0 332 978**
**A1**

## (12) EUROPÄISCHE PATENTANMELDUNG

(21) Anmeldenummer: 89103932.3

(22) Anmeldetag: 06.03.89

(51) Int. Cl.⁴: **B23K 35/02**

(30) Priorität: 17.03.88 CH 1014/88

(43) Veröffentlichungstag der Anmeldung:
20.09.89 Patentblatt 89/38

(84) Benannte Vertragsstaaten:
**AT BE CH DE FR GB IT LI NL SE**

(71) Anmelder: **LONZA AG**
**Gampel/Wallis Geschäftsleitung Basel**
**CH-4002 Basel(CH)**

(72) Erfinder: **Gampp, Kurt, Dr.**
**Hofmattweg 51**
**Arlesheim (Baselland)(CH)**
Erfinder: **Heinzen, Georg**
**Gartenstrasse 59**
**Muttenz (Baselland)(CH)**
Erfinder: **Reimann, Peter**
**Gansackerweg 1**
**Gelterkinden (Baselland)(CH)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) Ni-Zr-Lötfolie.

(57) Die Erfindung betrifft eine amorphe oder teilamorphe Ni-Zr-Lötfolie. Diese ist besondere geeignet zum Hartlöten von Keramik mit Keramik, Keramik mit Metallen, Metallen untereinander, Graphitteilen mit Graphitteilen oder Graphitteilen mit Metallen.

EP 0 332 978 A1

## Ni-Zr-Lötfolie

Die Erfindung betrifft eine Lötfolie aus einer amorphen oder teilamorphen Nickel-Zirkonlegierung zum Hartlöten von Keramik mit Keramik, Keramik mit Metallen, von Metallen untereinander, von Graphitteilen untereinander oder von Graphitteilen mit Metallen.

Für Hochtemperaturanwendungen sowohl von Metallen als auch bei Keramik ist das Hartlöten ein Fügeverfahren mit zunehmender Bedeutung. Der Begriff Hartlöten kann auch durch den Begriff Aktivlöten erklärt werden (Praktische Metallographie, Sonderbände, Stuttgart, 18, 1987).

Es kommt vorteilhaft zur Anwendung bei Sondermetallen, z.B. Titan, wo beim Schweissen die Gase vom Metall aufgenommen werden und zur Versprödung führen. Dies kann mit geeigneten Lotlegierungen vermieden werden, da ihr Schmelzpunkt unterhalb der Gefügeänderung des Sondermetalls liegt. Das Hartlöten wird ebenfalls mit Erfolg eingesetzt bei Metallen, Keramik oder gefügten Teilen aus Metall und Keramik, bei Teilen aus Graphit oder gefügten Teilen aus Graphit und Metall, sofern sie für einen Einsatz bei höheren Temperaturen vorgesehen sind.

Die gefügten Werkstoffe haben den Vorteil, dass Grundwerkstoffe mit unterschiedlichen Eigenschaften kombiniert werden können. Der Zweck des Fügens von Metall mit Keramik kann beispielsweise ein Verschleissschutz, eine Wärmedämmung, ein Kor rosionsschutz, eine elektrische Isolation, eine vakuumdichte Durchführung oder dergleichen sein. Die Fügetechnik durch Hartlöten ist auch für die Verbindung von Keramikteilen, gleicher oder verschiedener chemischer Zusammensetzung, von Bedeutung; insbesondere, wenn komplizierte Körper aus einfach geformten Teilen zusammengefügt werden sollen.

Besonders wichtig für eine dauerhafte Verbindung der Teile ist, dass diese Teile vom Lot gut benetzt werden.

Biegsame Folien sind vielfach einfacher zu handhaben und besser zu dosieren als Pulver oder Pasten.

Wegen ihrer hohen Duktilität eignen sich für das Hartlöten besonders amorphe oder teilamorphe Folien, die durch rasches Abschrecken aus der Schmelze erhalten werden.

Diese Folien bestehen aus nur einer, aber sehr homogener Schicht.

Für eine gute Benetzung ist notwendig, dass jede oxidische Verunreinigung an der Oberfläche der Lötmittel vermieden wird, daher wird das Hartlöten mit den erwähnten Folien vorzugsweise im Vakuum oder unter Schutzgas ausgeführt.

Aufgabe der vorliegenden Erfindung ist est, neue Lötfolien aus einer amorphen oder teilamorphen Nickel-Zirkonlegierung gemäss Patentanspruch 1 aufzuzeigen, die in besonderer Weise geeignet sind, Keramikteile untereinander, Keramik mit Metall, Metall untereinander, Graphitteile untereinander oder Graphitteile mit Metallen durch Hartlöten zu verbinden.

Die Nickel-Zirkonlegierung hat erfindungsgemäss eine Zusammensetzung von 20 bis 95 Atom% Nickel und 5 bis 80 Atom% Zirkon.

Vorteilhaft gelangen Legierungen mit Zusammensetzungen von 20 bis 30 Atom% Nickel und 70 bis 80 Atom% Zirkon oder 60 bis 70 Atom% Nickel und 30 bis 40 Atom% Zirkon oder 90 bis 95 Atom% Nickel und 5 bis 10 Atom% Zirkon zum Einsatz.

Besonders bevorzugte Legierungen sind $Ni_{24}Zr_{76}$, $Ni_{64}Zr_{36}$, $Ni_{91}Zr_{9}$.

Wichtige Voraussetzung ist, dass die verwendeten Legierungsbestandteile Nickel und Zirkon für die Herstellung der amorphen Legierungen eine Reinheit von mindestens 99,5% aufweisen. Ausserdem dürfen keine oxidischen Verunreinigungen vorhanden sein.

Da die Löttemperaturen für diese Legierungen in einem Bereich von 900 bis 1200°C liegen, sind die entsprechenden Lötfolien in besonderer Weise zum Hartlöten von Sondermetallen der Titangruppe (Titan, Zirkon und Hafnium) zum Verbinden von Keramiken bestehend aus Aluminiumoxiden, Zirkonoxiden, Magnesium-oxiden, Siliciumcarbiden oder deren Mischungen und zum Hartlöten von Keramiken der genannten Art mit den genannten Metallen sowie zusätzlich mit Nickel oder Eisenlegierungen geeignet. Im weiteren sind die Ni-Zr-Lötfolien zum Verbinden von Gra phitteilen mit Metallen aus der Reihe Titan, Eisen, Nickel, Zirkon oder deren Legierungen oder zum Löten von Graphitteilen untereinander einsetzbar.

Unter Graphitteilen werden Formteile aus handelsüblichem Sintergraphit verstanden.

Bevorzugt werden die erfindungsgemässen Nickel-Zirkon-Lötfolien zum Verbinden der stark oxidierenden Sondermetalle Titan oder Zirkon, von Keramiken aus Aluminiumoxid oder Zirkonoxid untereinander, von Aluminiumoxidkeramik mit Nickel und von Graphitteilen untereinander eingesetzt.

Untersuchungen haben gezeigt, dass bei den erfindungsgemässen Legierungen das Zirkon den chemisch reaktiven Bestandteil der Lötverbindung darstellt, während das Nickel den Passivanteil mit spannungsausgleichender Wirkung bildet.

Die Herstellung der erfindungsgemässen Lötfolien erfolgt durch Abschrecken der Schmelze der genannten Legierung mit einer Kühlrate von mindestens $10^5\,°C/s$. Dabei handelt es sich um Techniken, die in der Herstellung von glasartigen Metallen verbreitet sind. Zur Herstellung der erfindungsgemässen Folien wird zweckmässig das Schmelzspinnverfahren herangezogen, wo das schmelzflüssige Metall auf einem schnell rotierenden Kupferzylinder abgeschreckt und als Band/Folie abgezogen wird.

Unter diesen Bedingungen hergestellte Folien weisen glasartige oder amorphe Struktur und eine hohe Duktilität auf und sind in hohem Masse homogen.

Die Nickel-Zirkonlegierungen der vorliegenden Erfindung müssen, um dem Einsatz als Lötfolie zu genügen, mindestens teilweise amorph sein.

Die Dicke der erfindungsgemässen Ni-Zr-Folien beträgt zweckmässig zwischen 20 und 120 µm, vorzugsweise zwischen 40 und 90 µm.

Beispiele

Durch Aufbringen einer Metallschmelze, der in den folgenden Beispielen angegebenen Zusammensetzung auf eine mit einer Umdrehungsgeschwindigkeit von 21 m/sec. sich bewegenden Kupfertrommel unter Helium als Schutzgas und einem Unterdruck von ca. 0,8 bar, wurden amorphe Bänder mit einer Dicke von 60 µm und einer Breite von 3,5 mm hergestellt.

Die folgende Tabelle zeigt die Zusammensetzung von erfindungsgemässen Lötfolien.

| Beispiel | Ni Atom% | Zr Atom% | Schmelzpt. °C |
|----------|----------|----------|---------------|
| 1 | 24 | 76 | 960 |
| 2 | 64 | 36 | 1060 |
| 3 | 91 | 9 | 1170 |

Beispiel 4

Zwei Aluminiumoxidkeramiktestkörper der Masse 2,5 cm x 2,5 cm x 0,6 cm wurden an den zu verbindenen Oberflächen mit Ethanol entfettet und gesäubert. Eine $Ni_{24}Zr_{76}$-Lötfolie einer Dicke von 60 µm wurde zwischen die zu verbindenden Flächen der Testkörper eingefügt. Der Lötvorgang wurde durchgeführt in einem induktiv beheizten Hochvakuumofen bei einem Druck von $10^{-5}$ mbar, einer Temperatur von 1000°C über eine Dauer von 25 min. Es wurde eine chemisch widerstandsfähige, sehr dauerhafte Lötverbindung erhalten.

Beispiel 5

Die zu verbindenden Oberflächen eines $Al_2O_3$-Keramiktestkörpers der Masse 2,5 cm x 2,5 cm x 0,6 cm und eines zylinderförmigen Nickeltestkörpers mit einem Durchmesser von 2 cm wurden mit Ethanol entfettet und gesäubert. Zwischen die Oberfläche wurde eine $Ni_{64}Zr_{36}$-Lötfolie einer Dicke von 60 µm eingefügt.
Die Lötung wurde erreicht in einem induktiv beheizten Hochvakuumofen bei einem Druck von $10^{-5}$ mbar, einer Temperatur von 1100°C über eine Dauer von 20 min.
Es wurde eine widerstandsfähige und dauerhafte Lötverbindung erhalten.

Beispiel 6

Zwei rohrförmige Titantestkörper mit einem Druckmesser von 2 cm, Wandung 2 mm, wurde an den zu verbindenden Oberflächen mit Ethanol entfettet und gesäubert. Zwischen diesen Flächen wurde eine $Ni_{24}Zr_{76}$-Lötfolie einer Dicke von 60 µm eingefügt. Die Lötung wurde erreicht in einem induktiv beheizten Hochvakuumofen bei $10^{-4}$ mbar und einer Temperatur von 970°C. Das Ende des Lötvorgangs wurde visuell bestimmt. Es wurde eine äusserst widerstandsfähige und dauerhafte Lötverbindung erhalten.

3

Beispiel 7

Die zu verbindenden Stirnflächen von zwei Testkörpern aus Sintergraphit der Masse 2,5 cm x 2,5 cm x 0,7 cm wurden gesäubert. Zwischen den Oberflächen wurde eine $Ni_{24}Zr_{76}$-Lötfolie einer Dicke von 60 $\mu$m eingefügt. Die Lötung erfolgte unter Heliumatmosphäre in einem Hochvakuumofen bei $10^{-4}$ mbar und einer Temperatur von 1000°C während 15 min. Es wurde eine sehr widerstandsfähige und dauerhafte Verbindung erhalten.

Beispiel 8

Ein zylindrischer Graphittestkörper mit einem Durchmesser von 2 cm und einer Länge von 2 cm und ein zylindrischer Nickeltestkörper mit einem Durchmesser von 4 cm und einer Länge von 3 cm wurde an den zu verbindenden Oberflächen gesäubert. Zwischen diesen Flächen wurde eine $Ni_{24}Zr_{76}$-Lötfolie einer Dicke von 60 $\mu$m eingefügt. Die Lötung erfolgte in einem Hochvakuumofen bei $10^{-4}$ mbar und einer Temperatur von 1100°C während 30 min. Es wurde eine äusserst feste und widerstandsfähige Lötverbindung erreicht.

Beispiel 9

Ein Tankblech mit den Massen 20 mm x 6 mm x 1,5 mm und ein gewinkeltes Tankblech mit den selben Massen wurde an den zu verbindenden Oberflächen gesäubert. Zwischen diese Flächen wurde eine $Ni_{24}Zr_{76}$-Lötfolie einer Dicke von 60 $\mu$m eingefügt. Diese Lötung erfolgte in einem Hockvakuumofen bei $10^{-5}$ mbar und einer Temperatur von 1250°C während 5 min.
Es wurde eine feste und widerstandsfähige Lötverbindung erhalten.

## Ansprüche

1. Homogene duktile Lötfolie mit einer Legierungszusammensetzung von 20 bis 95 Atom% Nickel und 5 bis 80 Atom% Zirkon.

2. Lötfolie nach Patentanspruch 1 mit einer Legierungszusammensetzung von 20 bis 30 Atom% Nickel und 70 bis 80 Atom% Zirkon.

3. Lötfolie nach Patentanspruch 1 mit einer Legierungszusammensetzung von 60 bis 70 Atom% Nickel und 30 bis 40 Atom% Zirkon.

4. Lötfolie nach Patentanspruch 1 mit einer Legierungszusammensetzung von 90 bis 95 Atom% Nickel und 5 bis 10 Atom% Zirkon.

5. Lötfolie nach einem der Patentansprüche 1 bis 4, dadurch gekennzeichnet, dass die Legierung eine mindestens teilweise amorphe Struktur besitzt.

6. Lötfolie nach einem der Patentansprüche 1 bis 5, dadurch gekennzeichnet, dass sie eine Dicke von 20 bis 120 $\mu$m aufweist.

7. Verwendung einer Lötfolie nach Patentanspruch 1 zum Hartlöten von Keramikteilen untereinander, von Keramikteilen mit Metallen, von Metallen untereinander, von Graphitteilen untereinander oder von Graphitteilen mit Metallen.

8. Verwendung einer Lötfolie nach Patentanspruch 7 zum Hartlöten von Keramikteilen aus Aluminiumoxiden, Zirkonoxiden, Magnesiumoxiden, Siliciumcarbid oder deren Mischungen.

9. Verwendung einer Lötfolie nach Patentanspruch 7 zum Hartlöten von Keramikteilen aus Aluminiumoxiden, Zirkonoxiden, Magnesiumoxiden, Siliciumcarbid mit Metallen aus der Reihe Titan, Zirkonium, Hafnium, Nickel oder Eisen oder deren Legierungen.

10. Verwendung einer Lötfolie nach Patentanspruch 7 zum Hartlöten von Metallen der Reihe Titan, Zirkonium, Hafnium und Tantal oder deren Legierungen.

11. Verwendung einer Lötfolie nach Patentanspruch 7 zum Hartlöten von Graphitteilen mit Metallen aus der Reihe Titan, Eisen, Nickel, Zirkon oder deren Legierungen.

| | EINSCHLÄGIGE DOKUMENTE | | EP 89103932.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | US - A - 4 448 605 (MIZUHARA) <br><br> * Anspruch 1 * <br><br> -- | 1-11 | B 23 K 35/02 |
| Y | FR - A1 - 2 573 346 (INST. NAT. POLYTECH) <br><br> * Anspruch 1; Tabelle I * <br><br> -- | 1-11 | |
| Y | EP - A1 - 0 014 335 (ALLIED CHEMI-CAL CORP.) <br><br> * Anspruch 1 * <br><br> -- | 1-11 | |
| P,A | EP - A1 - 0 277 645 (SUMITOMO) <br><br> * Ansprüche 1,11; Tabelle 4 * <br><br> -- | 1 | |
| A | US - A - 4 034 454 (GALASSO) <br><br> * Anspruch 1 * <br><br> -- | 1 | RECHERCHIERTE SACHGEBIETE (Int. Cl.4) <br><br> B 23 K 35/00 |
| A | CHEMICAL ABSTRACTS, Band 96, Nr. 4, 25. Jänner 1982, Columbus, Ohio, USA <br><br> BELICIC, M. et al. "High-temperature brazing of primary-system components in reactor construction" Seite 389, Spalte 2, Zusammen-fassung-Nr. 25 966q <br><br> & DVS Ber. 1981, 69(Hart-Hoch--temperaturloeten Diffusions--schweißen), 47-54 <br><br> -- | 1 | |

Der vorliegende Recherchenbericht wurde für alle Patentansprüche erstellt.

| Recherchenort | Abschlußdatum der Recherche | Prüfer |
|---|---|---|
| WIEN | 02-05-1989 | HAMMER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | CHEMICAL ABSTRACTS, Band 108, Nr. 10, 7. März 1988, Columbus, Ohio, USA<br><br>KASHIWAGI, KOZO et al. "Brazes for bonding of ceramic to ceramic and ceramic to metal brazing"<br>Seite 286, Spalte 1, Zusammenfassung-Nr. 79 856p<br><br>& Jpn. Kokai Tokkyo Koho JP 62,199,288 [87,199,288]<br><br>---- | 1 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| WIEN | 02-05-1989 | HAMMER |